(19) Europäisches Patentamt
European Patent Office
Office européen des brevets

(11) EP 1 916 761 A1

(12) **EUROPEAN PATENT APPLICATION**

(43) Date of publication:
**30.04.2008 Bulletin 2008/18**

(51) Int Cl.:
***H02M 3/335*** (2006.01)

(21) Application number: **06122994.4**

(22) Date of filing: **26.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Salcomp Oyj**
**24101 Salo (FI)**

(72) Inventor: **Särkelä, Esa**
**98100 Kemijärvi (FI)**

(74) Representative: **Brax, Matti Juhani**
**Berggren Oy Ab,**
**P.O. Box 16**
**00101 Helsinki (FI)**

(54) **Method and circuit for controlling a switched-mode power supply**

(57) The invention concerns control of a switched-mode power supply. A switched-mode power supply according to the invention comprises a secondary switch (306) that enables a secondary side (302) of the switched-mode power supply to charge magnetic energy into a transformer (303) of the switched-mode power supply. The switched-mode power supply comprises also a control circuitry (310) that controls the operation of the secondary switch. Due to the fact that the secondary side is able to return energy to a primary side (301) of the switched-mode power supply the control of the switched-mode power supply can be fast. Furthermore, a need for an isolator circuit, e.g. an optical isolator, is avoided.

Fig. 3

EP 1 916 761 A1

**Description**

**Field of the invention**

The invention concerns generally the technology of control methods and control circuits for switched-mode power supplies. Especially the invention concerns the technology of using a transformer of a switched-mode power supply for transferring control information from a secondary side of the switched-mode power supply to a primary side of the switched-mode power supply.

**Background of the invention**

A switched-mode power supply must include inherent controlling functionalities that ensure controlled operation even in exceptional situations. Thinking about a battery charger for example, it is most certain that situations will occur where the input power is on, but there is no load coupled to the charger. Without control measures with some kind of limiting effects, continuously pumping electric power to the secondary side would cause the output voltage to rise above the nominal output voltage level. A short circuit at the output, on the other hand, could easily cause the output current to achieve unacceptably high values.

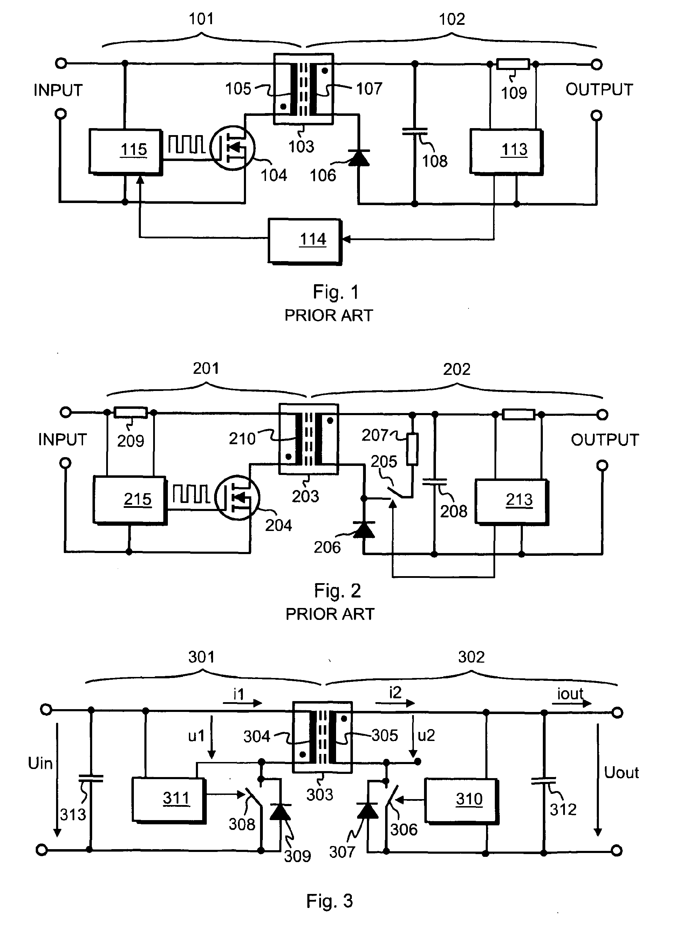

Figure 1 shows a principled illustration of a switched-mode power supply according to the prior art. The switched-mode power supply comprises a primary side 101 and a secondary side 102 separated from each other by a transformer 103. A primary switch 104 controls current flowing through a primary coil 105. When the primary switch is in a conducting state, magnetic energy is loaded into the transformer 103. The magnetic energy stored in the transformer is discharged to the secondary side after the primary switch has been turned to a non-conducting state. A diode 106 on the secondary side allows current to flow only in one direction through a secondary coil 107. A capacitor 108 coupled across the output of the device smoothens the output voltage. An inherent advantage of this kind of switched-mode power supply is the fact that there is a galvanic separation between the primary side 101 and the secondary side 102. Thus the electrical potentials of the primary and the secondary sides can float with respect to each other.

The switched-mode power supply comprises a supervisory circuit 113 that monitors the levels of the output voltage and output current. In this example the output current is monitored using a shunt resistor 109. The supervisory circuit forms control information that is used for controlling the operation of the primary switch 104. As the electrical potentials of the primary and the secondary sides of the switched-mode power supply can float with respect to each other there is a need for a galvanic separation on a signal path from the supervisory circuit 113 to a control unit 115 that produces a signal that drives a gate (or a base) of the primary switch 104. The control information is delivered from the supervisory circuit 113 to a control unit 115 via an isolator circuit 114 that can be for example an optical isolator. The isolator circuit 114 is, however, a component that plays a significant role in total material and component costs of a switched-mode power supply. Furthermore, especially an optical isolator is vulnerable to adverse effects of impurities.

**Description of the prior art**

Figure 2 shows a switched-mode power supply according to the prior art. The switched-mode power supply comprises a primary side 201 and a secondary side 202 separated from each other by a transformer 203. A primary switch 204 controls current flowing through a primary coil 210. The switched-mode power supply comprises a supervisory circuit 213 that monitors the levels of the output voltage and the output current. The supervisory circuit forms control information that is used for controlling the operation of the primary switch 204. The supervisory circuit operates a switch 205 that couples a low-impedance electrical component 207 between secondary terminals of the transformer 203. When the low-impedance electrical component 207 is coupled between the secondary terminals of the transformer during a conducting state of the primary switch 204 a peak occurs in primary current of the transformer. Therefore, the control information is delivered from the secondary side 202 to the primary side 201 in a form of peaks in the primary current. Because of a diode 206 an output capacitor 208 is not discharged via the low-impedance electrical component 207. Peaks in the primary current are detected with a control unit 215 that produces a signal that drives a gate (or a base) of the primary switch 204. In this example the primary current is monitored using a shunt resistor 209. An exemplary prior art publication disclosing a solution based on the above presented principle is US 4 930 060.

Impedance of the low-impedance electrical component 207 has to be so small that the peaks in the primary current are strong enough for enabling the control information to be reliably detected with the control unit 215. On the other hand, the impedance has to be so big that the peaks in the primary current are so weak that excessive over-dimensioning of the primary switch 204 is not required. In many practical cases it may be cumbersome to fulfil the above-mentioned boundary conditions.

A feature that relates to both of the switched-mode power supplies shown in figures 1 and 2 is the fact that the control of the output voltage is slow especially in a situation in which the output voltage is above its reference value.

This is due to the fact that the output capacitor 108, 208 can be charged, but not discharged, by operating the primary switch 104, 204.

**Brief description of the invention**

An objective of the present invention is to provide a circuit arrangement for controlling a switched-mode power supply such that drawbacks associated with the prior art are eliminated or reduced. A further objective of the present invention is to provide a method for controlling a switched-mode power supply such that drawbacks associated with the prior art are eliminated or reduced. A further objective of the present invention is to provide a switched-mode power supply such that drawbacks associated with the prior art are eliminated or reduced.

The objectives of the invention are achieved by equipping a switched-mode power supply with a secondary switch and with a control circuitry such that a secondary side of the switched-mode power supply is enabled to charge magnetic energy into a transformer between the secondary side and a primary side of the switched-mode power supply. The control circuitry is adapted to control the secondary switch according to at least one electrical quantity associated with the secondary side.

The invention yields appreciable benefits compared to prior art solutions. The benefits are discussed below.

A need for an isolator circuit for transferring control information from a secondary side to a primary side is avoided. This fact opens a way for a cost effective construction of a switched-mode power supply. Furthermore, it is easier to built a switched-mode power supply that has a good over-voltage tolerance when there is no need for optical isolators or like.

Transferring the control information from the secondary side to the primary side does not increase peak values of primary current. Therefore, implementation of the present invention into a switched-mode power supply does not raise a need for upgrading a peak current endurance of the primary switch.

The secondary switch can be used as a synchronous rectifying switch that decreases electrical losses of the secondary side. For this kind of use the secondary switch has, however, to be able to conduct current in two directions.

Due to the fact that the secondary side is able to return energy to the primary side the control of the switched-mode power supply can be fast.

A switched-mode power supply according to the invention comprises:

-    a primary side,

-    a secondary side, and

-    a transformer between the primary side and the secondary side,

and is characterized in that it further comprises:

-    a secondary switch in the secondary side, said secondary switch being adapted to enable the secondary side to charge magnetic energy into the transformer, and

-    a control circuitry adapted to control said secondary switch according to at least one electrical quantity associated with the secondary side.

A circuit arrangement according to the invention for controlling a switched-mode power supply is characterized in that it comprises:

-    a secondary switch in a secondary side of the switched-mode power supply, said secondary switch being adapted to enable the secondary side to charge magnetic energy into a transformer of the switched-mode power supply, and

-    a control circuitry adapted to control said secondary switch according to at least one electrical quantity associated with the secondary side.

A method according to the invention for controlling a switched-mode power supply is characterised in that a secondary side of the switched-mode power supply is enabled to charge magnetic energy into a transformer of the switched-mode power supply according to at least one electrical quantity associated with the secondary side.

A number of embodiments of the invention are described in accompanied dependent claims.

The invention itself, however, both as to its construction and its method of operation, together with additional objects and advantages thereof, will be best understood from the following description of specific embodiments when read in connection with the accompanying drawings.

The exemplary embodiments of the invention presented in this document are not to be interpreted to pose limitations to the applicability of the appended claims. The verb "to comprise" is used in this document as an open limitation that does not exclude the existence of also unrecited features. The features recited in depending claims are mutually freely combinable unless otherwise explicitly stated.

**Brief description of the figures**

The invention and its other advantages are explained in greater detail below with reference to the preferred embodiments presented in the sense of examples and with reference to the accompanying drawings, in which

figure 1 shows a principled illustration of a switched-mode power supply according to the prior art,

figure 2 shows a principled illustration of a switched-mode power supply according to the prior art,

figure 3 shows a high-level circuit diagram of a switched-mode power supply according to an embodiment of the invention,

figures 4a, 4b, 4c, and 4d show waveforms of magnetic flux, primary current, secondary current, and output voltage, respectively, for a switched-mode power supply according to an embodiment of the invention in an exemplary operating situation,

figure 5 shows a circuit diagram of a switched-mode power supply according to an embodiment of the invention,

figure 6 shows a circuit diagram of a switched-mode power supply according to an embodiment of the invention,

figure 7a shows a circuit diagram of a switched-mode power supply according to an embodiment of the invention,

figure 7b shows a circuit diagram of a switched-mode power supply according to an embodiment of the invention,

figure 8 shows a circuit diagram of a switched-mode power supply according to an embodiment of the invention,

figure 9 shows a circuit diagram of a switched-mode power supply according to an embodiment of the invention,

figure 10 shows a high-level circuit diagram of a switched-mode power supply according to an embodiment of the invention,

figure 11 shows a circuit arrangement according to an embodiment of the invention for controlling a switched-mode power supply, and

figure 12 is a flow chart of a method according to an embodiment of the invention for controlling a switched-mode power supply.

**Detailed description of embodiments of the invention**

Figures 1 and 2 have been explained above in the description of the prior art. Therefore, the following discussion will focus on figures 3 to 12.

Figure 3 shows a high-level circuit diagram of a switched-mode power supply according to an embodiment of the invention. The switched mode power supply comprises a primary side 301, a secondary side 302, a transformer 303 between the primary side and the secondary side, a secondary switch 306 in the secondary side, and a control circuitry 310 adapted to control said secondary switch according to at least one electrical quantity associated with the secondary side. The secondary switch enables the secondary side 302 to charge magnetic energy into the transformer 303. The switched mode power supply comprises a primary switch 308 and a control arrangement 311 that is adapted to control the operation of the primary switch. The control arrangement 311 is adapted to keep the primary switch 308 in a non-conducting state as long as secondary current i2 flows. The primary switch enables the primary side 301 to charge magnetic energy into the transformer 303. In parallel with the secondary switch 306 there is a diode 307 that enables the secondary side to discharge magnetic energy from the transformer and in parallel with the primary switch 308 there is a diode 309 that enables the primary side to discharge magnetic energy from the transformer. The switched mode power supply comprises an input capacitor 313 and an output capacitor 312. The input capacitor can be energized for example with a diode rectifier coupled to an ac-voltage source. The diode rectifier and the ac-voltage source are not shown in figure 3. A circuitry that loads the switched-mode power supply is coupled in parallel with the output capacitor. A loading circuitry is not shown in figure 3.

A simplified analysis is presented below in order to illustrate the basic principle of operation of the switched-mode power supply shown in figure 3. In the simplified analysis electrical components of the switched mode power supply are assumed to be ideal, i.e. effect of parasitic resistances, parasitic capacitances and stray inductances of electrical components as well as effect of magnetic hysteresis and eddy currents in the core material of the transformer 303 are neglected.

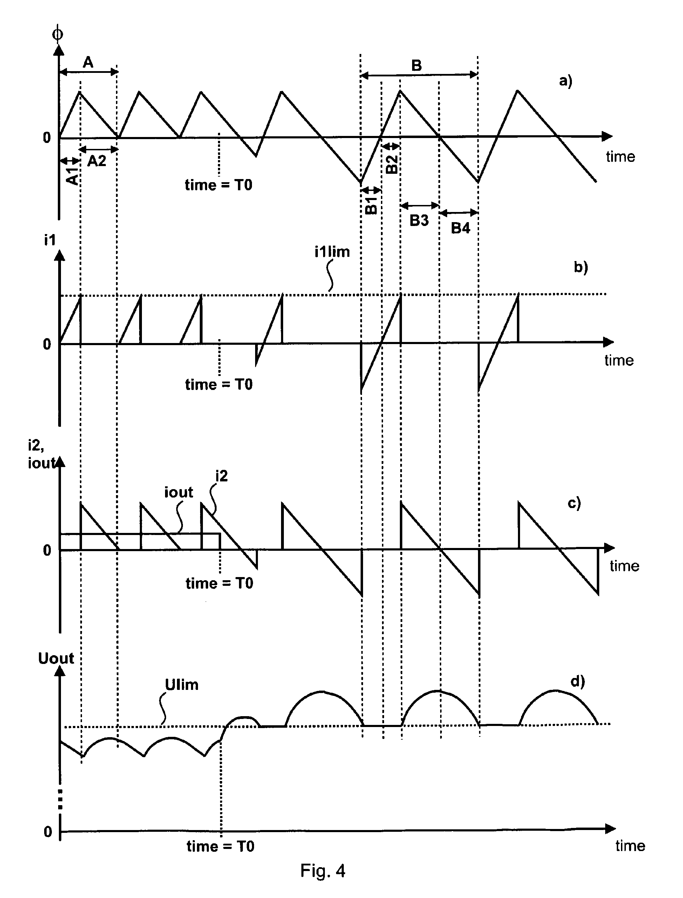

Figures 4a, 4b, 4c, and 4d show waveforms of magnetic flux $\phi$ of the transformer 303, the primary current i1, the secondary current i2, and output voltage Uout, respectively, for a switched-mode power supply according to an embodiment of the invention in an exemplary operating situation. All the figures 4a-4d have a same time scale.

In the exemplary situation that corresponds with figures 4a-4d a load of the switched-mode power supply is abruptly removed at a time instant T0. In this kind of situation output voltage Uout of the switched-mode power supply tends to rise.

In the embodiment of the invention associated with figures 4a-4d the control arrangement 311 has been adapted to change the primary switch 308 into a non-conducting state as a response to a situation in which the primary current i1 exceeds a current limit i1lim. The control circuitry 310 is adapted to keep the secondary switch in a conducting state as a response to a situation in which the output voltage Uout exceeds a voltage limit Ulim.

A waveform of output current iout that drops abruptly to zero at the time instant T0 is shown in figure 4c. The current and voltage limits i1lim and Ulim are shown as horizontal dashed lines in figures 4b and 4d, respectively.

The output voltage Uout behaves approximately according to the following differential equation:

$$\frac{dUout}{dt} = \frac{i2 - iout}{C}, \qquad (1)$$

where dUout/dt is the time derivative of the output voltage and C is the capacitance of the output capacitor 312.

When at least one of the primary switch 308 and the diode 309 is in the conducting state the primary current i1 behaves approximately according to the following differential equation:

$$\frac{di1}{dt} = \frac{Uin}{L1}, \qquad (2)$$

where di1/dt is the time derivative of the primary current and L1 is the inductance of a primary coil 304 of the transformer 303. The inductance L1 corresponds with a situation in which a secondary coil 305 of the transformer 303 is open circuited.

When at least one of the secondary switch 306 and the diode 307 is in the conducting state the secondary current i2 behaves approximately according to the following differential equation:

$$\frac{di2}{dt} = -\frac{Uout}{L2}, \qquad (3)$$

where di2/dt is the time derivative of the secondary current and L2 is the inductance of a secondary coil 305 of the transformer 303. The inductance L2 corresponds with a situation in which the primary coil 304 is open circuited.

The magnetic flux in the core of the transformer 303 is approximately:

$$\phi = \frac{N1 \times i1 + N2 \times i2}{Rm}, \qquad\qquad (4)$$

where Rm is the reluctance of the magnetic path of the core of the transformer, N1 is a number of turns in the primary coil 304, and N2 is a number of turns in the secondary coil 305.

Arrows in figure 3 denote positive directions of voltages and currents. The primary and the secondary coils 304, 305 of the transformer are oriented with respect to each other in such a way that a positive time derivative of the magnetic flux ($d\phi/dt > 0$) induces a positive primary voltage u1 and a negative secondary voltage u2.

A duty cycle A shown in figure 4a corresponds with the operation of the switched mode power supply when the output current iout is positive. The duty cycle A has two sequential phases A1 and A2.

In the phase A1:

- the primary switch 308 conducts the primary current i1 that is positive and increases according to equation (2) as illustrated in figure 4b,

- the primary side 301 charges magnetic energy into the transformer 303 because an absolute value of the magnetic flux increases as illustrated in figure 4a, and

- the secondary current i2 is zero and the output voltage Uout decreases due to the output current iout according to equation (1) as illustrated in figure 4d.

The phase A1 ends when the primary current exceeds the current limit i1lim and the primary switch is changed to the non-conducting state. On the boundary between phases A1 and A2 the primary current drops abruptly to zero as illustrated in figure 4b. As the magnetic flux $\phi$ cannot be changed abruptly the secondary current i2 rises abruptly, as illustrated in figure 4c, to such a value that the right hand side of equation (4) remains substantially constant.

In the phase A2:

- the diode 307 (or the secondary switch 306) conducts the secondary current i2 that is positive and decreases according to equation (3) as illustrated in figure 4c,

- the primary current i1 is zero as illustrated in figure 4b,

- the secondary side 302 discharges magnetic energy from the transformer 303 because the absolute value of the magnetic flux decreases as illustrated in figure 4a, and

- the output voltage Uout behaves according to equation (1) as illustrated in figure 4d.

The phase A2 ends when the secondary current i2 gets zero. The end of the phase A2 can be detected with the control arrangement 311 e.g. by detecting the primary voltage u1. During phase A2 the magnetic flux is decreasing ($d\phi/dt < 0$) and so the primary voltage u1 is negative. At the end of the phase A2 there is a step-wise increase in primary voltage u1 since the magnetic flux stops to decrease when the secondary current stops to decrease. The control arrangement 311 sets the primary switch 308 in the conducting state as a response to a situation in which the control arrangement 311 detects the end of the phase A2. As a consequence of the above-described event a new duty cycle is started.

After the time instant T0, the output current iout is zero and a positive secondary current increases the output voltage Uout in such a way that the voltage limit Ulim is exceeded at every duty cycle after T0 as illustrated in figure 4d. The control circuitry 310 sets the secondary switch to the conducting state as a response to the fact that the output voltage Uout exceeds the voltage limit. When the secondary switch is in the conducting state the secondary current is able get negative values.

A duty cycle B shown in figures 4a-4d corresponds with the operation of the switched mode power supply when the output current iout is zero. The duty cycle B has four sequential phases B1 - B4.

In the phase B1:

- the diode 309 (or the primary switch 308) conducts the primary current i1 that is negative and increases according to equation (2) as illustrated in figure 4b,

- the primary side 301 discharges magnetic energy from the transformer 303 because an absolute value of the magnetic flux decreases as illustrated in figure 4a, and

- the secondary current i2 is zero and the output voltage Uout is constant according to equation (1) as illustrated in figure 4d.

In the phase B2:

- the primary switch 308 conducts the primary current i1 that is positive and increases according to equation (2) as illustrated in figure 4b,

- the primary side 301 charges magnetic energy into the transformer 303 because an absolute value of the magnetic flux increases as illustrated in figure 4a, and

- the secondary current i2 is zero and the output voltage Uout is constant according to equation (1) as illustrated in figure 4d.

The phase B2 ends when the primary current exceeds the current limit i1lim and the primary switch is changed to the non-conducting state. On the boundary between phases B2 and B3 the primary current drops abruptly to zero as illustrated in figure 4b. As the magnetic flux $\phi$ cannot be changed abruptly the secondary current i2 rises abruptly, as illustrated in figure 4c, to such a value that the right hand side of equation (4) remains substantially constant.

In the phase B3:

- the diode 307 (or the secondary switch 306) conducts the secondary current i2 that is positive and decreases according to equation (3) as illustrated in figure 4c,

- the primary current i1 is zero as illustrated in figure 4b,

- the secondary side 302 discharges magnetic energy from the transformer 303 because the absolute value of the magnetic flux decreases as illustrated in figure 4a, and

- the output voltage Uout increases according to equation (1) as illustrated in figure 4d.

In the phase B4:

- the secondary switch 306 conducts the secondary current i2 that is negative and decreases according to equation (3) as illustrated in figure 4c,

- the primary current i1 is zero as illustrated in figure 4b,

- the secondary side 302 charges magnetic energy to the transformer 303 because the absolute value of the magnetic flux increases as illustrated in figure 4a, and

- the output voltage Uout decreases according to equation (1) as illustrated in figure 4d.

The phase B4 ends when the secondary switch 306 is set to the non-conducting state and the secondary current changes to zero in a step-wise manner as illustrated in figure 4c. As the magnetic flux $\phi$ cannot be changed abruptly the primary current i1 experiences a step-wise drop, as illustrated in figure 4b, to such a negative value that the right hand side of equation (4) remains substantially constant. As a consequence of the above-described event a new duty cycle is started.

The end of the phase B4 can be detected with the control arrangement 311 e.g. by detecting the primary voltage u1. During phase B4 the magnetic flux is decreasing ($d\phi/dt < 0$) and so the primary voltage u1 is negative. At the end of the phase B4 there is a step-wise increase in primary voltage u1 since the magnetic flux stops to decrease when the secondary current stops to decrease. It is not necessary to be able to set the primary switch to the conducting state at the same time when the secondary switch is set to the non-conducting state because the diode 309 is able to conduct the negative primary current.

In the switched mode power supply shown in figure 3 the energy discharged by the primary side 301 from the transformer 303 can be loaded to the input capacitor 313. Therefore, the above-described principle to control the output voltage Uout is substantially a lossless control process. The control process is also fast because the output voltage Uout is decreased already in the same duty cycle in which the output voltage gets higher than the voltage limit Ulim as illustrated in figure 4d.

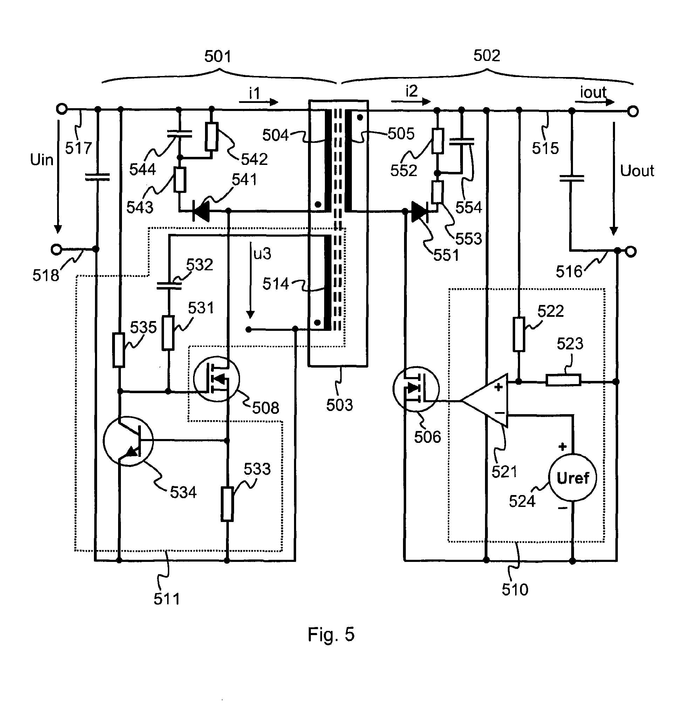

Figure 5 shows a circuit diagram of a switched-mode power supply according to an embodiment of the invention. The switched mode power supply comprises a primary side 501, a secondary side 502, and a transformer 503 between the primary side and the secondary side. The secondary side comprises a secondary switch 506 and a control circuitry 510 adapted to set the secondary switch into a conducting state as a response to a situation in which output voltage Uout exceeds a voltage limit Ulim and to set the secondary switch into a non-conducting state as a response to a situation in which the output voltage Uout drops below the voltage limit Ulim. The secondary switch 506 is a metal-oxide-semiconductor (MOS) transistor. An internal body diode of the MOS-transistor 506 acts as a diode that is able to conduct positive secondary current i2.

The control circuitry 510 comprises a comparator 521 adapted to connect a control terminal, i.e. gate, of the secondary switch to electrical potential of a positive output terminal 515 when a plus terminal of the comparator has a higher electrical potential than a minus terminal of the comparator and to connect a gate of the secondary switch 506 to electrical potential of a negative output terminal 516 when the plus terminal has a lower electrical potential than the minus terminal. The control circuitry 510 comprises a reference voltage source 524 that is adapted to produce reference voltage Uref. A positive output terminal of the reference voltage source is connected to the minus terminal of the comparator. Resistors 522 and 523 are adapted to perform voltage division for the output voltage Uout. The divided voltage is connected to the plus terminal of the comparator. The voltage limit Ulim and reference voltage Uref are related as Uref = Ulim $\times$ R2 / (R1 + R2), where R1 and R2 are the resistances of the resistors 522 and 523, respectively. The reference voltage source 524 can be e.g. a linear regulator that is energized by the output voltage.

The primary side 501 comprises a primary switch 508 and a control arrangement 511 adapted to control the operation of the primary switch. The primary switch 508 is a metal-oxide-semiconductor (MOS) transistor. An internal body diode of the MOS-transistor 508 acts as a diode that is able to conduct negative primary current i1. The control arrangement 511 comprises a primary side auxiliary coil 514 that is electrically coupled via a resistor 531 and a capacitor 532 to a control terminal, i.e. gate, of the primary switch. When the secondary current i2 ceases to flow, i.e. the time derivative of magnetic flux (d$\phi$/dt) of the transformer 503 chances its value, the gate of the primary switch gets a positive electrical charge and the primary switch 508 becomes conductive. The primary current i1 is monitored with a shunt resistor 533. When the primary current gets higher than a current limit i1lim, i.e. maximum allowed primary current, voltage over the shunt resistor 533 exceeds a base threshold voltage of a bipolar transistor 534. Therefore, the bipolar transistor 534 gets conductive, the gate of the primary switch is connected to electrical potential of a negative input terminal 518, and the primary switch 508 gets to the non-conducting state. The control arrangement 511 comprises a start resistor 535 that is needed for starting the operation of the switched mode power supply.

The switched mode power supply comprises a diode 541, resistors 542 and 543, and a capacitor 544 that constitute a well known ringing attenuator for a primary coil 504 of the transformer 503. Correspondingly, a diode 551, resistors 552 and 553, and a capacitor 554 that constitute a well known ringing attenuator for a secondary coil 505 of the transformer 503.

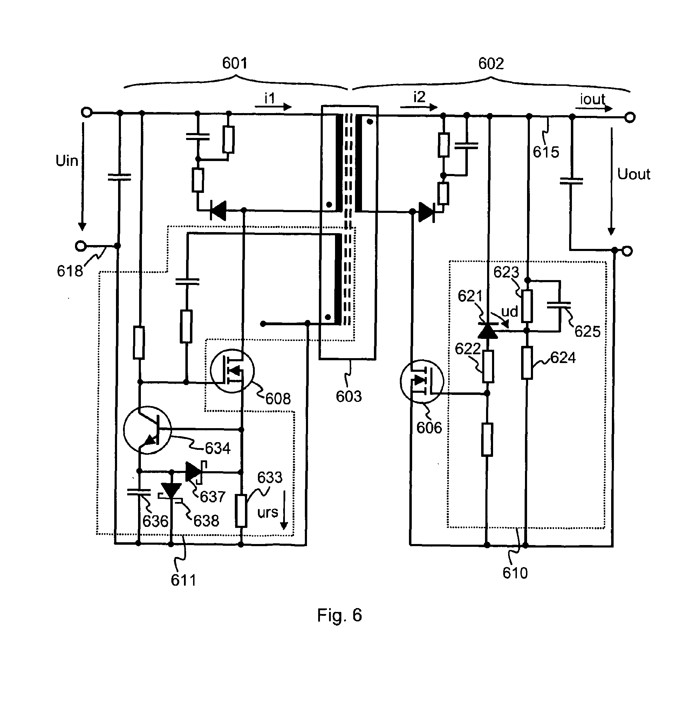

Figure 6 shows a circuit diagram of a switched-mode power supply according to an embodiment of the invention. The switched mode power supply comprises a primary side 601, a secondary side 602, and a transformer 603 between the primary side and the secondary side. The secondary side comprises a secondary switch 606 and a control circuitry 610 adapted to set the secondary switch into a conducting state as a response to a situation in which output voltage Uout exceeds a voltage limit Ulim and to set said secondary switch into a non-conducting state as a response to a situation in which the output voltage Uout drops below the voltage limit Ulim.

The control circuitry 610 comprises a reference diode 621 adapted to connect a control terminal, i.e. gate, of the secondary switch to a positive output terminal 615 via a resistor 622 when voltage ud between a cathode terminal of the reference diode and a control terminal of the reference diode exceeds a threshold value Uth that is specific to the reference diode. When the voltage ud is below the threshold value Uth the reference diode 621 is in a non-conducting state. The control circuitry 610 comprises resistors 623 and 624 and a capacitor 625, which perform filtered voltage division for the output voltage Uout. The voltage limit Ulim and the threshold value Uth are related as Uth = Ulim $\times$ R1 / (R1 + R2), where R1 and R2 are the resistances of the resistors 623 and 624, respectively.

The primary side 601 comprises a primary switch 608 and a control arrangement 611 adapted to control the operation of the primary switch. Primary current i1 is monitored with a shunt resistor 633. The primary current i1 gets a negative value at the beginning of a duty cycle if secondary current i2 has been at a negative value at the end of the previous duty cycle. A negative primary current indicates that energy flow from the primary side to the secondary side should be reduced. The energy flow can be reduced e.g. by reducing the current limit i1lim, i.e. the maximum allowed value of the primary current.

A negative peak value Upeak of voltage urs across the shunt resistor 633 is caught into a capacitor 636 with the aid of schottky-barrier diodes 637 and 637. Therefore, the electrical potential of the emitter of a bipolar transistor 634 is below the electrical potential of a negative input terminal 618 by the negative peak value Upeak. The higher is the negative peak value Upeak the smaller is a value of the primary current i1 that is able to set the bipolar transistor 634 into a conducting state and, thereby, to set the primary switch 608 into the non-conducting state. The current limit i1lim and the negative peak value are related as:

$$i1lim = \frac{Ubth + Upeak}{Rsh}, \qquad (5)$$

where Ubth is the base threshold voltage of the bipolar transistor 634, Rsh is the resistance of the shunt resistor 633, and Upeak < 0.

Upeak is given by the equation:

$$Upeak = \frac{N2 \times Rsh}{N1} \times i2peak, \qquad (6)$$

where i2peak is a negative peak value (< 0) of secondary current i2 and N1 and N2 are numbers of turns in primary and secondary coils of the transformer 603, respectively.

As can be seen, the negative peak value of the secondary current i2peak (< 0) at the end of a certain duty cycle reduces the current limit i1lim for the next duty cycle. Reduction of the current limit i1lim decreases losses of the switched mode power supply. Energy transferred from the secondary side back to the primary side can be seen as a message that carries control information from the secondary side to the primary side.

The switched mode power supply shown in figure 6 represents an example of a solution in which energy flow from the primary side to the secondary side is decreased as a response to a situation in which the primary side receives energy from the secondary side, i.e. a negative value of the primary current is detected. In other words, there is a limiting feedback action. In the switched mode power supply shown in figure 6 the energy flow is decreased by reducing the limit value i1lim of the primary current, i.e. by reducing the amount of magnetic energy that is charged from the primary side into the transformer within one duty cycle. It is also possible to realise a limiting feedback action by delaying a time instant when the primary side starts to charge magnetic energy into the transformer, i.e. by delaying a time instant when the primary switch is set into a conducting state.

The principle of using energy transferred from the secondary side back to the primary side as a message that carries control information from the secondary side to the primary side is applicable not only to solutions in which there is a limiting feedback action. The above-mentioned principle can be used with many kinds of feedback control methods. For example, the above-mentioned principle can be applied also to solutions in which there is a requesting feedback action. In an exemplary switched mode power supply having a requesting feedback action energy flow from the primary side to the secondary side is increased as a response to a situation in which the primary side receives energy from the secondary side, e.g. a negative value of the primary current is detected. The operation can be for example as follows:

- At the beginning, the primary side gives small excitation energy pulses at a moderate pace to the secondary side.

- After an electrical quantity, e.g. current, voltage, or power, associated with the secondary side has exceeded a first pre-determined limit the secondary side starts to require energy from the primary side by returning energy back to the primary side. The secondary side can return energy during every duty cycle or during N out of N+M duty cycles (N and M are integers).

- The primary side interprets a detected negative value of the primary current as a request for energy and starts to charge a higher amount of energy into the transformer during each duty cycle than in the situation in which the small excitation energy pulses were given.

- The secondary side returns energy to the primary side until the electrical quantity associated with the secondary side exceeds a second pre-determined limit.

- After the electrical quantity associated with the secondary side has exceeded the second pre-determined limit, the secondary side ceases to require energy from the primary side, i.e. the secondary side ceases to return energy back to the primary side.

- As a consequence, the primary side ceases to deliver energy to the secondary side and the electrical quantity associated with the secondary side starts to decrease.

- After the electrical quantity associated with the secondary side has dropped below a third pre-determined limit, the secondary side starts again to require energy from the primary side by returning energy to the primary side, and the operation is continued as presented above.

The above-described operation can be realised, for example, with programmable digital processing means and with appropriate computer programs. A signal proportional to the electrical quantity associated with the secondary side can be converted into a digital form and a resulting digital signal can be given to a programmable digital processor of the secondary side. The programmable digital processor of the secondary side is adapted to control the secondary switch via a gate (or base) driver circuitry. Correspondingly, voltage over a shunt resistor on a path of the primary current can be converted into a digital form and the resulting digital signal can be given to a programmable digital processor of the primary side. The programmable digital processor of the primary side is adapted to control the primary switch via a gate (or base) driver circuitry.

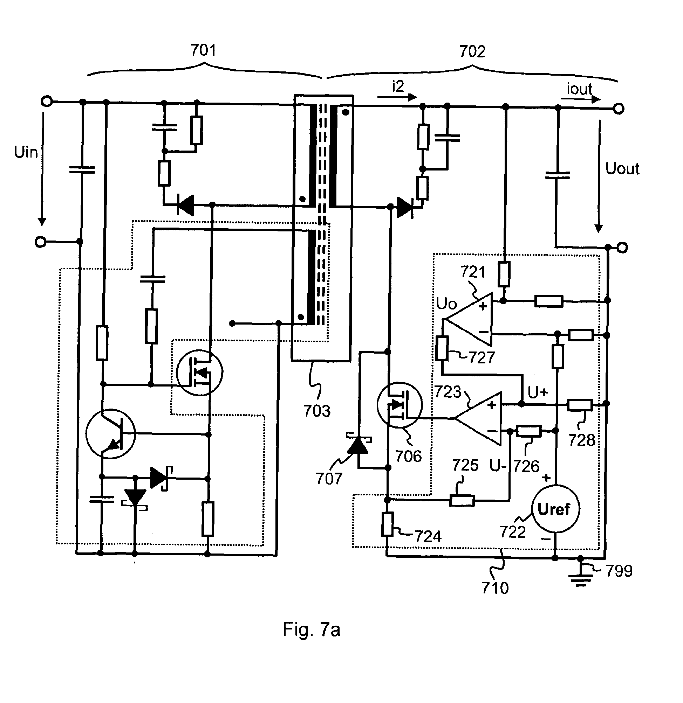

Figure 7a shows a circuit diagram of a switched-mode power supply according to an embodiment of the invention. The switched mode power supply comprises a primary side 701, a secondary side 702, and a transformer 703 between the primary side and the secondary side. The secondary side comprises a secondary switch 706 and a control circuitry 710 adapted to keep the secondary switch 706 in a conducting state as a response to a situation in which secondary current i2 exceeds a current limit i2lim or output voltage Uout exceeds a voltage limit Ulim. In this embodiment of the invention the secondary switch is not only a device that enables the secondary side to charge magnetic energy into the transformer but it also acts as a synchronous rectifying element that is used for decreasing voltage loss over a diode 707 when the secondary current i2 is positive. Therefore, the secondary switch is used for reducing losses during a phase in which the secondary side discharges magnetic energy from the transformer.

The control circuitry 710 comprises a comparator 721 that is adapted to compare the output voltage Uout with the voltage limit Ulim. Input signal for a plus terminal of the comparator 721 is formed with voltage division from the output voltage Uout. Input signal for a minus terminal of the comparator 721 is formed with voltage division from a reference voltage Uref. The reference voltage Uref is formed with a reference voltage source 722 that can be e.g. a linear regulator that is energized by the output voltage. The control circuitry 710 comprises a comparator 723 an output terminal of which is connected to a control terminal (i.e. a gate) of the secondary switch 706. Input signal U- for a minus terminal of the comparator 723 with respect to a ground 799 is substantially:

$$U- = \frac{R2}{R1+R2} \times Uref - \frac{R1}{R1+R2} \times Rsh \times i2, \qquad (7)$$

where R1 and R2 are the resistances of resistors 725 and 726, respectively, and Rsh is the resistance of a shunt resistor 724. It is assumed here that Rsh << R1 and Rsh << R2.

Input signal U+ for a plus terminal of the comparator 723 with respect to the ground 799 is substantially:

$$U+ = \frac{R3}{R3+R4} \times Uo, \qquad (8)$$

where R3 and R4 are the resistances of resistors 728 and 727, respectively, and Uo is output signal of the comparator 721.

The resistances R1, R2, R3, R4, and Rsh are selected in such a way that U+ > U-if i2 > i2lim or if the output signal Uo of the comparator 721 is high. Therefore, the secondary switch is kept in a conducting state if at least one of the following conditions is fulfilled:

- A) the secondary current i2 > the current limit i2lim,

- B) the output voltage Uout > the voltage limit Ulim.

In order to fulfil the first condition A) the resistances R1, R2, R3, R4, and Rsh have to be selected in such a way that the right hand side of the equation (8) is greater than the right hand side of the equation (7) when i2 > i2lim even if the output signal Uo of the comparator 721 were low.

In order to fulfil the second condition B) the resistances R1, R2, R3, R4, and Rsh have to be selected in such a way that the right hand side of the equation (8) is greater than the right hand side of the equation (7) when the output signal Uo of the comparator 721 is high, i.e. Uout > Ulim, even if the secondary current i2 had a strong negative value.

If the output voltage Uout is less than the voltage limit Ulim the secondary switch 706 is set to a non-conducting state when the secondary current i2 has decayed below the current limit i2lim. In this kind of case the secondary switch operates only as a synchronous rectifier element.

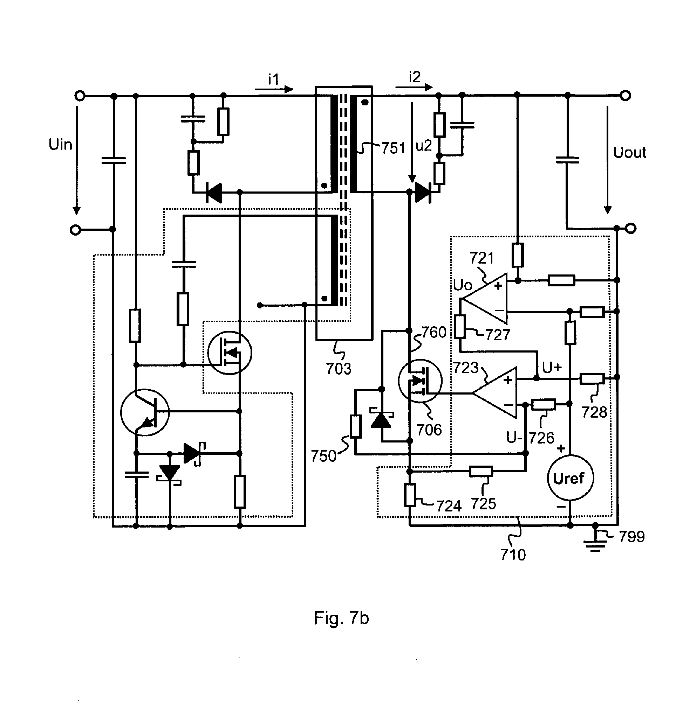

Figure 7b shows a circuit diagram of a switched-mode power supply according to an embodiment of the invention. The switched mode power supply shown in figure 7b is a further development of the switched mode power supply shown in figure 7a. In the switched mode power supply shown in figure 7b a control circuitry 710 is adapted to set a secondary switch 706 into a non-conducting state as a response to a situation in which secondary current i2 drops below a negative current limit, i.e. secondary current charging magnetic energy to a transformer 703 exceeds a pre-determined limit value.

The secondary switch 706 is kept in a conducting state if secondary current i2 exceeds a positive current limit i2lim. Therefore, resistances R1, R2, R3, R4, and Rsh of resistors 725, 726, 728, 727, and 724, respectively, are selected in such a way that the right hand side of the equation (8) is greater than the right hand side of the equation (7) when i2 > i2lim even if output signal Uo of a comparator 721 were low.

The secondary switch 706 is set into the non-conducting state when the secondary current i2 drops below the negative current limit i2limNeg. Therefore, resistances R3 and R4 of the resistors 728 and 727, respectively, are selected in such a way that the right hand side of the equation (8) is smaller than the right hand side of the equation (7) when i2 < i2limNeg even if output signal Uo of a comparator 721 were high.

In a situation in which when the secondary current i2 drops below the negative current limit i2limNeg the secondary switch 706 is set into the non-conducting state and the secondary current is changed to zero in a step-wise manner. The stray inductance of a secondary coil 751 of a transformer 703 tries to maintain the negative secondary current and, therefore, electrical potential of a drain terminal 760 of the secondary switch increases. Furthermore, as the magnetic flux ϕ of the transformer 703 cannot be changed abruptly, primary current i1 experiences a step-wise drop to a negative value. When the primary current i1 is flowing (or crossing zero), an input voltage Uin is connected to a primary coil of the transformer, the time-derivative dϕ/dt of the magnetic flux is positive, and voltage u2 over the secondary coil 751 is negative. Therefore, the electrical potential of the drain terminal 760 is high just after the secondary switch has been set into the non-conducting state and/or when the primary current i1 is flowing (or crossing zero).

The drain terminal 760 is coupled to a minus terminal of a comparator 723 through a resistor 750. The resistance of the resistor 750 is selected in such a way that in a situation in which the secondary switch has just been set into the non-conducting state and/or the primary current i1 is flowing (or crossing zero), input signal U- for the minus terminal of the comparator 723 with respect to a ground 799 is so high that the secondary switch 706 is kept in the non-conducting state even if the right hand side of the equation (8) were greater than the right hand side of the equation (7), i.e. even if Uout > Ulim.

In other respects, the operation of the control circuitry 710 shown in figure 7b is similar to the operation of the control circuitry of the switched mode power supply shown in figure 7a. When the secondary current i2 is flowing, the resistor 750 does not have a substantial influence on the operation, because voltage over the secondary switch 706 is small when the secondary current i2 is flowing.

Limiting the value of the secondary current i2 charging magnetic energy to a transformer 703 decreases power losses of electronic components and electromagnetic disturbances emitted by the switched mode power supply. On the other hand, the limiting slows down the control of output voltage Uout, because the secondary switch is not necessarily kept in a conducting state as long as the output voltage Uout exceeds a pre-determined limit value. In practice, a suitable compromise can be made dealing with the power losses and the electromagnetic disturbances with respect to the speed of control.

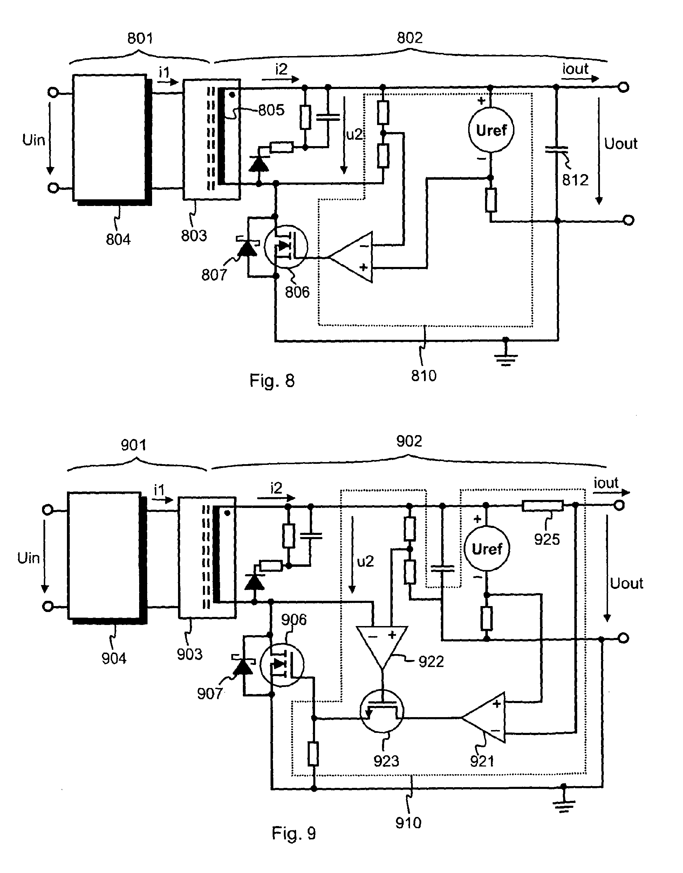

Figure 8 shows a circuit diagram of a switched-mode power supply according to an embodiment of the invention. The switched mode power supply comprises a primary side 801, a secondary side 802, and a transformer 803 between the primary side and the secondary side. A block 804 represents a circuitry of the primary side. A control circuitry 810 is adapted to set a secondary switch 806 into a conducting state as a response to a situation in which secondary voltage u2 exceeds a voltage limit Ulim and to set the secondary switch into a non-conducting state as a response to a situation in which the secondary voltage u2 drops below the voltage limit Ulim. In this embodiment of the invention a decision to change the secondary switch 806 to the conducting state is based on the secondary voltage u2 instead of output voltage Uout. If the switched mode power supply is loaded with a reactive load it is possible that output current iout is negative over a certain time interval, i.e. the reactive load charges an output capacitor 812 during the mentioned time interval. Therefore, it is possible that the output voltage Uout gets higher than the voltage limit Ulim during such a portion of a duty cycle when primary current i1 is flowing.

The secondary voltage u2 is:

$$u2 = -N2\frac{d\phi}{dt},\qquad\qquad(9)$$

where N2 is a number of turns in a secondary coil 805 of a transformer 803 and $d\phi/dt$ is the time derivative of magnetic flux $\phi$. During a portion of a duty cycle when the primary current i1 flows the time derivative of the magnetic flux is positive and hence the secondary voltage u2 is negative. Therefore, the secondary voltage u2 does not get higher than the (positive) voltage limit Ulim during a portion of a duty cycle when the primary current i1 flows. During a portion of a duty cycle when secondary current i2 flows via the secondary switch 806 or via a diode 807 the secondary voltage u2 is substantially same as the output voltage Uout. The voltage limit Ulim is related to reference voltage Uref shown in figure 8 via the ratio of a voltage division performed for the secondary voltage u2.

Figure 9 shows a circuit diagram of a switched-mode power supply according to an embodiment of the invention. The switched mode power supply comprises a primary side 901, a secondary side 902, and a transformer 903 between the primary side and the secondary side. A block 904 represents a circuitry of the primary side. A control circuitry 910 is adapted to keep a secondary switch 906 in a conducting state as a response to a situation in which output current iout exceeds a current limit ioutlim and secondary voltage u2 has a same polarity than output voltage Uout. The fact that the secondary voltage u2 is required to have a same polarity than the output voltage Uout ensures that the secondary switch 906 is kept in a non-conducting state during a portion of a duty cycle when primary current i1 flows.

The control circuitry 910 comprises a comparator 921. Output signal of the comparator 921 is high when voltage loss over a shunt resistor 925 exceeds reference voltage Uref. The control circuitry 910 comprises a comparator 922. Output signal of the comparator 922 is high when the secondary voltage u2 has a same polarity than the output voltage Uout. The output signal of the comparator 922 is connected to a control terminal of a switch element 923. The switch element is in a conducting state when the output signal of the comparator 922 is high and in a non-conducting state when the output signal is low. The secondary switch 906 is in a conducting state when the output signal of the comparator 921 is high and the switch element 923 is in the conducting state. The switch element 923 can be, for example, a field effect transistor (FET).

For a person skilled to art it is clear that it is possible to combine the above-presented control principles of a secondary switch. For example, a switched-mode power supply according to an embodiment of the invention comprises a control circuitry that is adapted to keep a secondary switch in a conducting state when at least one of the following conditions is fulfilled:

- output current iout exceeds a current limit and secondary voltage has a same polarity than output voltage,

- the output voltage exceeds a voltage limit.

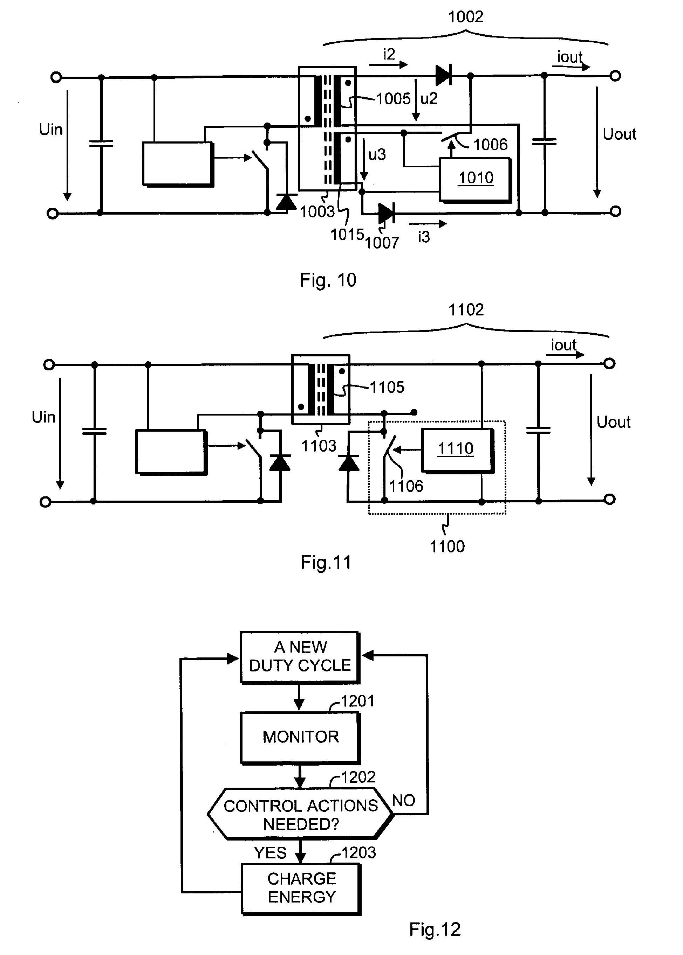

Figure 10 shows a high-level circuit diagram of a switched-mode power supply according to an embodiment of the invention. A transformer 1003 comprises a secondary side auxiliary coil 1015. The switched-mode power supply comprises a secondary switch 1006 that is adapted to control auxiliary secondary current i3.

The auxiliary secondary coil and the secondary switch are adapted to enable the secondary side 1002 of the switched-mode power supply to charge magnetic energy into the transformer 1003.

A circulating current component via a secondary coil 1005 and the secondary side auxiliary coil 1015 can be prevented for example by arranging a number of turns N3 of the secondary side auxiliary coil 1015 to be higher than a number of turns N2 of the secondary coil 1005. When secondary current i2 is flowing, output voltage Uout is substantially $N2 \times d\phi/dt$. Auxiliary secondary voltage u3 is $N3 \times d\phi/dt$ that is higher than the output voltage if N3 > N2. Due to a diode 1007 the auxiliary secondary current i3 is zero even if the secondary switch 1006 were in a conducting state. If the secondary switch 1006 can conduct only positive auxiliary secondary current i3 the diode 1007 is not needed.

In a switched-mode power supply according to an embodiment of the invention a control circuitry 1010 is adapted to keep the secondary switch 1006 in a conducting state as a response to a situation in which the auxiliary secondary voltage u3 exceeds a voltage limit Ulim.

Figure 11 shows a circuit arrangement 1100 according to an embodiment of the invention for controlling a switched-mode power supply. The circuit arrangement 1100 comprises a secondary switch 1106 in a secondary side 1102 of the switched-mode power supply. The secondary switch is adapted to enable the secondary side to charge magnetic energy into a transformer 1103 of the switched-mode power supply. The circuit arrangement 1100 comprises a control circuitry 1110 adapted to control the secondary switch according to at least one electrical quantity associated with the secondary side.

In a circuit arrangement according an embodiment of the invention the secondary 1106 switch is electrically coupled to a secondary coil 1105 of the transformer. In a circuit arrangement according an alternative embodiment of the invention the secondary switch 1106 is electrically coupled to a secondary side auxiliary coil.

In a circuit arrangement according an embodiment of the invention the control circuitry 1110 comprises a comparator an output terminal of which is electrically coupled to a control terminal of the secondary switch.

In a circuit arrangement according an embodiment of the invention the control circuitry 1110 comprises a reference diode that is electrically coupled to a control terminal of the secondary switch.

In a circuit arrangement according an embodiment of the invention the secondary switch 1106 is a metal-oxide-semiconductor transistor.

In a circuit arrangement according an embodiment of the invention an internal body diode of a metal-oxide-semiconductor transistor is adapted to operate as a reverse diode of the secondary switch.

Figure 12 is a flow chart of a method according to an embodiment of the invention for controlling a switched-mode power supply. In phase 1201 at least one electrical quantity associated with a secondary side of the switched mode power supply is monitored. In a decision block 1202 it is decided whether or not the secondary side is enabled to charge magnetic energy into a transformer of the switched-mode power supply. The decision is based on the monitored at least one electrical quantity. In phase 1203 the secondary side is enabled to charge magnetic energy into the transformer.

In a method according to an embodiment of the invention the secondary side is enabled to charge magnetic energy to the transformer as a response to a situation in which output voltage of the switched-mode power supply exceeds a pre-determined voltage limit.

In a method according to an embodiment of the invention the secondary side is enabled to charge magnetic energy to the transformer as a response to a situation in which voltage over a secondary coil of the transformer exceeds a pre-determined voltage limit.

In a method according to an embodiment of the invention the secondary side is enabled to charge magnetic energy to the transformer as a response to a situation in which voltage over a secondary side auxiliary coil of the transformer exceeds a pre-determined voltage limit.

In a method according to an embodiment of the invention the secondary side is enabled to charge magnetic energy to the transformer as a response to a situation in which output current of the switched-mode power supply exceeds a pre-determined current limit.

In a method according to an embodiment of the invention a secondary switch of the secondary side is kept in a conducting state as response to a situation in which one of the following conditions is fulfilled: secondary current of the transformer exceeds a pre-determined current limit and output voltage of the switched-mode power supply exceeds a pre-determined voltage limit.

The specific examples provided in the description given above should not be construed as limiting. For example, it is clear for a person skilled to art that electrical quantities associated with a primary side of a switched mode power supply and/or electrical quantities associated with the secondary side of the switched mode power supply can be converted from an analogue form into a digital form and various digital signal processing (DSP) methods can be used for controlling the primary side and/or the secondary side. Therefore, the invention is not limited merely to the embodiments described above, many variants being possible without departing from the scope of the inventive idea defined in the independent claims.

**Claims**

1. A switched-mode power supply comprising:

   - a primary side (301),
   - a secondary side (302), and
   - a transformer (303) between the primary side and the secondary side,

   **characterized in that** the switched-mode power supply further comprises:

   - a secondary switch (306) in the secondary side, said secondary switch being adapted to enable the secondary side to charge magnetic energy into the transformer, and
   - a control circuitry (310) adapted to control said secondary switch (306) according to at least one electrical quantity associated with the secondary side (302).

2. A switched-mode power supply according to claim 1, **characterised in that** said secondary switch is electrically coupled to a secondary coil (305) of the transformer.

3. A switched-mode power supply according to claim 1, **characterised in that** the transformer comprises a secondary side auxiliary coil (1015) and said secondary switch is electrically coupled to said secondary side auxiliary coil.

4. A switched-mode power supply according to claim 1, **characterised in that** said at least one electrical quantity comprises output voltage of the switched-mode power supply and the control circuitry (510) is adapted to keep said secondary switch in a conducting state as a response to a situation in which the output voltage of the switched-mode power supply exceeds a pre-determined voltage limit.

5. A switched-mode power supply according to claim 1, **characterised in that** said at least one electrical quantity comprises voltage over a secondary coil of the transformer and the control circuitry (810) is adapted to keep said secondary switch in a conducting state as a response to a situation in which the voltage over a secondary coil (805) of the transformer exceeds a pre-determined voltage limit.

6. A switched-mode power supply according to claim 3, **characterised in that** said at least one electrical quantity comprises voltage over the secondary side auxiliary coil and the control circuitry (1010) is adapted to keep said secondary switch in a conducting state as a response to a situation in which the voltage over the secondary side auxiliary coil (1015) of the transformer exceeds a pre-determined voltage limit.

7. A switched-mode power supply according to claim 1, **characterised in that** said at least one electrical quantity comprises output current of the switched-mode power supply and voltage over a secondary coil of the transformer, and the control circuitry (910) is adapted to keep said secondary switch in a conducting state as a response to a situation in which both of the following conditions are fulfilled: the output current of the switched-mode power supply exceeds a pre-determined current limit and the voltage over a secondary coil of the transformer has a same polarity than output voltage of the switched mode power supply.

8. A switched-mode power supply according to claim 1, **characterised in that** said at least one electrical quantity comprises output voltage of the switched-mode power supply and secondary current of the transformer, and the control circuitry (710) is adapted to keep said secondary switch in a conducting state as a response to a situation in which at least one of the following conditions is fulfilled: the secondary current of the transformer exceeds a pre-determined current limit and the output voltage of the switched-mode power supply exceeds a pre-determined voltage limit.

9. A switched-mode power supply according to claim 1, **characterised in that** the control circuitry (510) comprises a comparator (521) an output terminal of which is electrically coupled to a control terminal of said secondary switch.

10. A switched-mode power supply according to claim 1, **characterised in that** the control circuitry (610) comprises a reference diode (621) that is electrically coupled to a control terminal of said secondary switch.

11. A switched-mode power supply according to claim 1, **characterised in that** it comprises a shunt resistor (633) in series with a primary coil of the transformer and a control arrangement (611) adapted to reduce a limit value of primary current as a response to a situation in which the primary current is detected to discharge magnetic energy from the transformer.

12. A switched-mode power supply according to claim 1, **characterised in that** the transformer comprises a primary side auxiliary coil (514) that is electrically coupled to a control terminal a primary switch (508).

13. A switched-mode power supply according to claim 1, **characterised in that** said secondary switch (506) is a metal-oxide-semiconductor transistor.

14. A switched-mode power supply according to claim 13, **characterised in that** an internal body diode of said metal-oxide-semiconductor transistor is adapted to operate as a reverse diode of said secondary switch.

15. A switched-mode power supply according to claim 1, **characterised in that** said at least one electrical quantity comprises secondary current of the transformer (703) and the control circuitry (710) is adapted to set said secondary switch (706) into a non-conducting state as a response to a situation in which the secondary current charges magnetic energy into the transformer and exceeds a pre-determined current limit.

16. A circuit arrangement for controlling a switched-mode power supply, **characterized in that** the circuit arrangement comprises:

    - a secondary switch (1106) in a secondary side (1102) of the switched-mode power supply, said secondary switch being adapted to enable the secondary side to charge magnetic energy into a transformer (1103) of the switched-mode power supply, and
    - a control circuitry (1110) adapted to control said secondary switch (1106) according to at least one electrical quantity associated with the secondary side (1102).

17. A circuit arrangement according to claim 16, **characterised in that** said secondary switch is electrically coupled to a secondary coil (1105) of the transformer.

18. A circuit arrangement according to claim 16, **characterised in that** the transformer comprises a secondary side auxiliary coil and said secondary switch is electrically coupled to said secondary side auxiliary coil.

19. A circuit arrangement according to claim 16, **characterised in that** the control circuitry comprises a comparator an output terminal of which is electrically coupled to a control terminal of said secondary switch.

20. A circuit arrangement according to claim 16, **characterised in that** the control circuitry comprises a reference diode that is electrically coupled to a control terminal of said secondary switch.

21. A circuit arrangement according to claim 16, **characterised in that** said secondary switch is a metal-oxide-semiconductor transistor.

22. A circuit arrangement according to claim 21, **characterised in that** an internal body diode of said metal-oxide-semiconductor transistor is adapted to operate as a reverse diode of said secondary switch.

23. A method for controlling a switched-mode power supply, **characterised in that** a secondary side of the switched-mode power supply is enabled to charge (1203) magnetic energy into a transformer of the switched-mode power supply according (1202) to at least one electrical quantity associated with the secondary side.

24. A method according to claim 23, **characterised in that** the secondary side is enabled to charge magnetic energy to the transformer as a response to a situation in which output voltage of the switched-mode power supply exceeds a pre-determined voltage limit.

25. A method according to claim 23, **characterised in that** the secondary side is enabled to charge magnetic energy to the transformer as a response to a situation in which voltage over a secondary coil of the transformer exceeds a pre-determined voltage limit.

26. A method according to claim 23, **characterised in that** the secondary side is enabled to charge magnetic energy to the transformer as a response to a situation in which voltage over a secondary side auxiliary coil of the transformer exceeds a pre-determined voltage limit.

27. A method according to claim 23, **characterised in that** the secondary side is enabled to charge magnetic energy to the transformer as a response to a situation in which output current of the switched-mode power supply exceeds a pre-determined current limit.

28. A method according to claim 23, **characterised in that** a secondary switch of the secondary side is kept in a conducting state as response to a situation in which one of the following conditions is fulfilled: secondary current of the transformer exceeds a pre-determined current limit and output voltage of the switched-mode power supply exceeds a pre-determined voltage limit.

29. A method according to claim 23, **characterised in that** a secondary switch of the secondary side is set into a non-conducting state as response to a situation in which secondary current of the transformer charges magnetic energy into the transformer and exceeds a pre-determined current limit.

Fig. 1
PRIOR ART

Fig. 2
PRIOR ART

Fig. 3

Fig. 4

Fig. 5

Fig. 6

Fig. 7a

Fig. 7b

Fig. 8

Fig. 9

Fig. 10

Fig.11

Fig.12

**European Patent Office**

## EUROPEAN SEARCH REPORT

Application Number

EP 06 12 2994

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/100740 A1 (IWASHITA YASUHIRO [JP]) 27 May 2004 (2004-05-27) * abstract * * figure 1 * | 1-29 | INV. H02M3/335 |
| X | US 6 400 587 B1 (GEREN MICHAEL D [US] ET AL) 4 June 2002 (2002-06-04) * column 2, line 51 - column 3, line 11 * * figures 1,2 * | 1-29 | |
| X | US 4 868 730 A (WARD MICHAEL A V [US]) 19 September 1989 (1989-09-19) * column 8, lines 51-68 * * figures 1,4 * | 1-29 | |
| X | WO 97/12436 A (PHILIPS ELECTRONICS NV [NL]; PHILIPS NORDEN AB [SE]) 3 April 1997 (1997-04-03) * abstract * * page 2, lines 4-10 * * page 2, lines 26,27 * * figure 6 * * claims 1,2 * | 1-29 | |
| A | WO 2006/000610 A (SALCOMP OY [FI]; LAMPINEN PERTTI [FI]) 5 January 2006 (2006-01-05) * abstract * * figures 1-4 * | 1-29 | TECHNICAL FIELDS SEARCHED (IPC)  H02M |
| A,D | US 4 930 060 A (LEONARDI GIOVANNI M [CH]) 29 May 1990 (1990-05-29) * abstract * * figure 1 * | 1,16,23 | |

The present search report has been drawn up for all claims

| Place of search | Date of completion of the search | Examiner |
|---|---|---|
| Munich | 5 April 2007 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 12 2994

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2007

| Patent document cited in search report | | Publication date | Patent family member(s) | | Publication date |
|---|---|---|---|---|---|
| US 2004100740 | A1 | 27-05-2004 | CN<br>JP | 1507141 A<br>2004180433 A | 23-06-2004<br>24-06-2004 |
| US 6400587 | B1 | 04-06-2002 | NONE | | |
| US 4868730 | A | 19-09-1989 | NONE | | |
| WO 9712436 | A | 03-04-1997 | CN<br>DE<br>DE<br>JP | 1168200 A<br>69605530 D1<br>69605530 T2<br>10510139 T | 17-12-1997<br>13-01-2000<br>20-07-2000<br>29-09-1998 |
| WO 2006000610 | A | 05-01-2006 | GB | 2430051 A | 14-03-2007 |
| US 4930060 | A | 29-05-1990 | NONE | | |

EPO FORM P0459

For more details about this annex : see Official Journal of the European Patent Office, No. 12/82

**EP 1 916 761 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4930060 A